(19) Europäisches Patentamt
European Patent Office
Office européen des brevets

(11) EP 0 750 654 B1

(12) **EUROPÄISCHE PATENTSCHRIFT**

(45) Veröffentlichungstag und Bekanntmachung des Hinweises auf die Patenterteilung:
10.02.1999 Patentblatt 1999/06

(51) Int Cl.⁶: **C09D 163/00**, C08G 59/18, C08G 59/68

(21) Anmeldenummer: 95913067.5

(22) Anmeldetag: 09.03.1995

(86) Internationale Anmeldenummer:
PCT/EP95/00864

(87) Internationale Veröffentlichungsnummer:
WO 95/25147 (21.09.1995 Gazette 1995/40)

(54) **EINKOMPONENTIGE, DUROPLASTISCH HÄRTENDE BESCHICHTUNGSMASSE**

SINGLE-PACKAGE, DUROPLASTIC HARDENABLE COATING COMPOUND

COMPOSITION D'ENDUCTION DUROPLASTIQUE DURCISSABLE A UN SEUL COMPOSANT

(84) Benannte Vertragsstaaten:
AT BE DE ES FR GB IT NL PT SE

(30) Priorität: 16.03.1994 DE 4408865

(43) Veröffentlichungstag der Anmeldung:
02.01.1997 Patentblatt 1997/01

(73) Patentinhaber: A. Raymond & Cie
38028 Grenoble (FR)

(72) Erfinder:
• HINTERWALDNER, Rudolf
D-81547 München (DE)
• LESSER, Hans-Jürgen
D-79618 Rheinfelden (DE)
• BÖTTCHER, Axel
D-46487 Wesel (DE)
• GRUNDKE, Ullrich
D-47137 Duisburg (DE)
• LIEBETANZ, Klaus-Peter
D-47138 Duisburg (DE)

(74) Vertreter: Kirchgaesser, Johannes, Dipl.-Ing.
p/a Fa. A. RAYMOND GmbH & Co. KG
Teichstrasse 57
79539 Lörrach (DE)

(56) Entgegenhaltungen:
EP-A- 0 265 056          WO-A-91/13925
GB-A- 977 330

**Beschreibung**

Gegenstand der Erfindung sind duroplastisch härtende Beschichtungsmassen zum Ausrüsten von Oberflächen aus unterschiedlichen Werkstoffen mit einer multifunktionellen, korrosionsbeständigen, abrasions- und verschleißfesten, bei Temperaturen < 80°C klebfreien, mittels Energie aktivicrbaren Klebschicht bzw. -film.

Befestigungselemente, die zum Halten und/oder Befestigen von Bau- und Funktionsteilen auf Trägeruntergründen einsetzbar sind, sind hinreichend bekannt. Zu ihrer Befestigung auf Trägeruntergründen bedient man sich vorzugsweise mechanisch- und/oder physikalisch wirkenden Verbindungstechniken mit allen damit verbundenen Nachteilen.

Beim Herstellen einer mechanisch wirksamen Befestigung werden die Trägerwerkstoffe durch Anlegen von Stanz- und/oder Bohrlöcher geschädigt. Um nun dieselbe Tragfähigkeit des geschädigten Werkstoffes sicher zu stellen, ist er stärker zu dimensionieren, was technisch oftmals nicht realisierbar und unwirtschaftlich ist.

Die physikalischen Verbindungstechniken basieren dagegen vorzugsweise auf diversen Arten des Schweißens und Lötens, wobei mit sehr hohen Temperaturen gearbeitet werden muß. Im Bereich der Befestigungstechnik lassen sich die physikalischen Verbindungsverfahren nur dann anwenden, wenn die zu paarenden Werkstoffe ausreichend hohe und gute elektrische- und/oder wärmeleitfähige Eigenschaften besitzen. Dies ist prinzipiell nur bei Werkstoffpaarungen aus Metall gegeben.

Trotz einem außerordentlich hohen Entwicklungsstand in der Anwendungstechnik bietet das Schweißen und Löten im Bereich der Verbindungs- und Befestigungstechnik primär nur einen wirtschaftlichen Vorteil, weil sich mit kurzen Taktzeiten Elemente befestigen lassen. In technischer und qualitativer Hinsicht aber überwiegen die Nachteile bei den physikalischen Verbindungstechniken und sie beeinflussen die merkantilen Ergebnisse zusätzlich negativ. Diese Nachteile sind in Abhängigkeit der einzelnen Verfahrenstechniken und der metallenen Werkstoffpaarungen u. a. folgende:

- Gefügeänderungen, die die metallenen Werkstoffe in der Schweißnaht und deren Umgebung durch die Erwärmung (Erhitzen) erfahren;
- Herabsetzung der Festigkeitswerte durch Gefügeänderungen;
- Entstehen von Spannungen in den Werkstoffen durch ungleichmäßige Erwärmung, die partiell zu Rissen führen können;
- Glasige Schweißstellen
- Schlackeneinschlüsse
- Naht ungenügend durchgeschweißt (Kerbwirkung und Bruchgefahr)
- Undichte Schweißnähte
- Löcher in der Naht
- Fügeteilpaarungen aus unterschiedlichen Werkstoffen lassen sich damit nicht herstellen
- relativ niedrige Losdrehmomente bei geschweißten oder gelöteten Befestigungselementen.

Diese und andere Nachteile stehen in einem kausalen Zusammenhang mit dem Entstehen von Korrosionsquellen und/oder event. Schädigungen der auf den metallenen Werkstoffpaarungen vorhandenen Korrosionsschutzschichten nach einem Einsatz von mechanischen und/oder physikalischen Verbindungsverfahren. Diese Gefahrenquellen für die Korrosionsbildung lassen sich nur mittels zeit- und kostenaufwendigen Nacharbeiten reduzieren oder eliminieren, sofern sie erkannt werden. Zusätzlich sind auch bei solchen Werkstoffpaarungen noch größere Einschränkungen beim Einsatz dieser konventionellen Verbindungstechniken hinzunehmen, die wiederum die Wirtschaftlichkeit negativ beeinflussen.

Beim Verarbeiten von thermoplastischen Kunststoffen wird das Schweißen zum Herstellen von einfachen Verbunden ebenfalls genutzt. Für die Befestigungstechnik jedoch haben physikalische Verbindungsverfahren. beim Verbinden von Werkstoffpaarungen aus thermoplastischen Kunststoffen keine Bedeutung, weil Thermoplaste eine Reihe von negativen Eigenschaften, wie z.B. Kriechen, niedrige Wärmebeständigkeit und gegebenenfalls ein Migrieren von weichmachenden Inhaltsstoffen, besitzen.

In den letzten Jahren hat es nicht an Anstrengungen gefehlt, um diese Nachteile aus den mechanischen und/oder physikalischen Verbindungsverfahren mittels der konventionellen Klebtechnik im Bereich der Befestigungstechnik zu eliminieren. In einigen wenigen Gebieten führten diese Bemühungen zu einem partiellen Erfolg. Das heißt die Befestigungselemente wurden mit physikalisch oder chemisch abbindendem Klebstoff auf einen Untergrund geklebt, wozu marktübliche Produkte eingesetzt wurden.

Solche adhäsive Befestigungen können in wenigen Einzelanwendungen zwar hilfreich sein, jedoch sind sie nicht für ein Fertigungssystem "adhäsives Verbinden und Befestigen" geeignet. Denn hierfür besitzen die konventionellen Klebstoffsysteme eine Vielzahl von Nachteilen. Diese sind u.a. folgende:

- Lange Ablüfte-, Trocken- und Abbindezeiten bei wäßrigen und/oder lösemittelhaltigen, physikalisch abbindenden Klebstoffsystemen

- Lange Härtungszeiten bei Reaktionsklebstoffsystemen

- Niedrige Wärme- und Kriechfestigkeiten bei thermoplastischen Rückgratbindemitteln, einschließlich den physikalisch abbindenden Schmelzklebstoffen.

Auch mittels physikalisch abbindenden und feuchtigkeitshärtenden Schmelzklebstoffen, lassen sich keine befriedigenden Ergebnisse erzielen. Mit den physikalisch abbindenden Schmelzklebstoffen können zwar Befestigungselemente ausgerüstet werden, jedoch sind die damit hergestellten Klebschichten bzw. -filme - infolge ihrer thermoplastischen Eigenschaften - nicht wärmebeständig und kriechfest.

Bei den feuchtigkeitshärtenden Schmelzklebstoffen kommt ein weiterer Nachteil hinzu, daß die damit ausgerüsteten Befestigungselemente einzeln zu verpacken sind, um sie gegen Feuchtigkeit, z.B. aus der Luft, zu schützen. Somit sind sie zum Ausrüsten von Massengütern ungeeignet. Des weiteren haben diese feuchtigkeitshärtenden Klebstoffe den Nachteil, daß sie zur Aushärtung 12 bis 72 Stunden benötigen. (Siehe u.a. R.M. Evans "Polyurethane Sealants", Technomic Publishing, PA, USA, 1993)

Mittels Haftklebstoffe bemühte man sich auch Befestigungsaufgaben zu lösen. So wird z.B. in der französichen Patentschrift 2 542 829 ein Befestigungselement beschrieben, das an der Verbundfläche mit einem doppelseitig klebenden Band ausgerüstet ist. Die noch nicht beanspruchte Haftklebstoffschicht ist mit einer abhäsiven Schutzfolie abgedeckt.

Haftklebstoffe und damit hergestellte Selbstklebartikel sind jedoch für eine strukturelle Verbindungs- und Befestigungstechnik schon deshalb nicht geeignet, weil infolge der in der Haftklebstoffschicht permanent vorhandenen "Mikrobrown'schen Molekularbewegung" primär nur Klebrigkeit (Haftung) an der Grenzfläche zum Trägeruntergrund gegeben und keine Adhäsion vorhanden ist. Des weiteren kriechen Haftklebstoffe, insbesondere auf porenfreien Untergründen, infolge der permanent vorhandenen "Mikrobrown'schen Molekularbewegung". Auf diese führt u.a. der Fachmann die selbstklebenden Eigenschaften zurück. Allein aus diesem Grund sind die Haftklebstoffe zum Ausrüsten von Befestigungselementen völlig ungeeignet, weil sie im Applikationsfall keine permanente Adhäsion, insbesondere für strukturelle Klebverbunde mit einem Trägermaterial ausbilden können. Analoge Probleme sind vom Einsatz einfacher selbstklebender Funktionsteile, wie Bilderhaken, aus der Praxis bekannt geworden.

In jüngerer Zeit sind auch innovative Reaktionsschmelzklebstoffe vorgestellt worden, die sich insbesondere zum Strukturkleben von Fahrzeugbauteilen aus Metall eignen. Mit diesen neuartigen Klebstoffen lassen sich zwar partiell einige kritische Klebtechnik-Parameter bei einzelnen befestigungstechnischen Montagefällen lösen, trotzdem sind sie zum Ausrüsten von Befestigungselementen schon deshalb nicht geeignet, weil sie u.a.

- bei Raumtemperatur einen klebrigen, pastösen bis halbfesten Aggregatzustand besitzen und zum Teil fließen und kriechen
- lange An- und Durchhärtungszeiten, bei hohen Temperaturen z.B. $\geq$ 5 Minuten/220°C, benötigen und somit
- zum Vorausrüsten von Massengütern - wie Befestigungselemente- nicht infrage kommen und
- für Überkopf- und Wandmontagen ungeeignet sind.

Sie lassen sich deshalb in einem Fertigungssystem "Kleben" nur in Kombination mit dem Punktschweißen anwenden.

Für Serienfertigungen, wo innerhalb kurzer Zeiteinheiten eine Vielzahl (z.B. 100 bis 500 Stück) von Befestigungselementen von Hand und/oder insbesondere mittels Robotertechnik zu montieren und zu befestigen sind, wie dies u.a. im Fahrzeugbau der Fall ist, sucht die Industrie und gewerbliche Wirtschaft seit langem nach besseren, alternativen Innovationslösungen als Ersatz zum physikalischen Verbinden in der Befestigungstechnik. Aber auch die Beschränkung der physikalischen Verbindungstechniken auf Werkstoffpaarungen aus Metall und die vorhandenen Gefahrenpotentialen begründen die Forderungen nach anderen Verbindungsverfahren. Gleichzeitig will man in Werkstoffpaarungen unabhängig werden.

Beim Evaluieren und Vergleichen der bekannten und konventionellen Verbindungsarten, wie vorstehend ausgeführt, kommt man zu der Erkenntnis, daß innovative Alternativen nur über einen stoff- und kraftschlüssigen Verbund zu lösen sind.

Will man zusätzlich die Gefahrenpotentiale der physikalischen Verbindungsverfahren, wie z.B. die Korrosion, beseitigt wissen, bleibt im Prinzip nur noch der stoffschlüssige Verbund mittels Kleben zum Befestigen übrig, wodurch man auch werkstoffunabhängig würde. Da die moderne Klebtechnik keine Transferlösungen anbot, war völliges Neuland zur Entwicklung von geeigneten adhäsiven Beschichtungsmassen zu betreten.

Aufgabe und Ziel der vorliegenden Erfindung ist die Bereitstellung von solchen einkomponentigen, duroplastisch härtenden Beschichtungsmassen gemäß dem Oberbegriff des Anspruchs 1, die zum (Vor-) Ausrüsten von zu verbindenden Elementen, vorzugsweise von Befestigungselementen mit handhabbaren, klebfreien, aktivierbaren Klebschicht bzw. -film geeignet sind und solche Voraussetzungen schaffen können, daß sich die damit ausgerüsteten Elemente analog den physikalischen Verbindungsverfahren verarbeiten und anwenden lassen. Gleichzeitio sollen mit solchen Substituten die Nachteile und bekannten Mängel, die bei mechanischen und/oder physikalischen Verbindungsverfahren gegeben sind, beseitigt werden.

Die Lösung der Aufgabe erfolgt durch

- Beschichtungsmassen gemäß Anspruch 1 - 8,
- Verfahren zu ihrer Herstellung gemäß Anspruch 9,
- sowie durch ihre Anwendung zum adhäsiven Ausrüsten von Oberflächen, Befestigungselementoberflächen oder zum adhäsiven Imprägnieren textiler Werkstoffe gemäß Ansprüche 10-12.

Solche adhäsiven Beschichtungsmassen für Befestigungslemente sind essentielle Voraussetzungen und bilden die Grundlage für ein neues, innovatives Fertigungs- und Montagesystem "adhäsives Befestigen" mit hohen Verbundqualitäten und Wirtschaftlichkeiten.

Zur Erfüllung einer Reihe von spezifischen Pflichten in Herstellung, Ausrüsten bzw. Beschichten und/oder Anwendung, sind für die erfindungsgemäßen Beschichtungsmassen nur chemisch abbindende Rückgratbindemittel geeignet. Unter chemisch abbindenden Rückgratbindemitteln versteht der Fachmann solche Polymere und Harze, die mittels einer chemischen Umsetzungsreaktion in hoher molekulare Polymere mit duromeren Eigenschaften übergeführt werden.

Gemäß vorliegender Erfindung sind die adhäsiven Beschichtungsmassen auf der Grundlage von solchen chemisch abbindenden Rückgratbindemitteln aufgebaut, die bei Temperaturen < 50°C halbfeste bis feste Aggregatzustände und Glasübergangstemperaturen >-20°C besitzen. Solche Polymere und/oder Harze haben vor ihrer Härtung bzw. Vernetzung thermoplastische Eigenschaften und erst nach der Aktivierung erfolgt eine Härtung bzw. Vernetzung durch Polymerisation, Polyaddition und/oder Polykondensation wodurch hochmolekulare, duromere Strukturpolymere entstehen. Des weiteren müssen die für die erfindungsgemäßen Beschichtungsmassen geeigneten chemisch abbindenden Rückgratbindemittel mittels Energie härt- bzw. vernetzbar sein, damit sie allein oder mit weiteren Reaktionspartnern strukturelle Klebschichten mit duromeren Eigenschaften bilden können. Die mittleren Molekulargewichte ($\overline{M}_W$) der Rückgratbindemittel und der anderen üblichen polymeren Zusätze liegen zwischen 500 und 250.000.

Um nun zu adhäsiven Beschichtungsmassen zu gelangen mit denen sich multifunktionelle Klebschichten bzw. -filme auf den Befestigungselementoberflächen herstellen lassen, werden solche Rückgratbindemittel benötigt, die sowohl über Polyaddition als auch durch Polymerisation härt- bzw. vernetzbar sind, wie überraschenderweise gefunden wurde. Mit solchen Rückgratbindemitteln lassen sich die erfindungsgemäßen einkomponentigen, adhäsiven Beschichtungsmassen formulieren und damit Klebschichten bzw. -filme herstellen, die mittels Energie

- reaktivierbar und
- ein- oder mehrstufig härt- bzw. vernetzbar

sind.

Diese Multifunktionalität der Klebschicht ist eine essentielle Forderung aus der Praxis an die Klebschicht, um beim Arbeiten mit sehr kurzen Taktzeiten direkt nach dem Kontakt und Aufsetzen des Befestigungselementes auf eine Trägeroberfläche eine ausreichende funktionelle Klebfestigkeit aufbauen und erzielen zu können.

Aus der Familie der chemisch abbindenden Rückgratbindemittel sind solche bevorzugt, die mindestens 2 reaktive Gruppen im Molekül enthalten. Mindestens eines der Bindemittel enthält Epoxidgruppen als reaktive Gruppen. Die Rückgratbindemittel stammen insbesondere aus der Familie der Epoxid-, Vinylester- und/oder (Meth)acrylharze. Diese können aliphatischer, cycloaliphatischer und/oder aromatischer Natur sein, wobei aromatische Epoxid- und/oder Vinylesterharze aus Phenolen, o-Kresolen, Bis-Phenolen, Fluorenphenolen, Novolaken, Glycidylisocyanuraten und dergleichen besonders bevorzugt sind, weil sie in Abhängigkeit der Härtungsart besonders gute alterungs-, temperatur- und chemikalienbeständige Klebschichten mit hohen Glasübergangstemperaturen liefern. Besonders geeignete Rückgratbindemittel sind u.a. solche Epoxidharze auf der Grundlage von Tetraglycidyldi- bzw. -polyamine, wie z.B. N,N,N', N'-Tetraglycidyl- $\alpha$, $\alpha'$bis-(4-aminophenyl)-p-diisopropylbenzol.

Die Epoxidgruppen dieser Rückgratbindemittel lassen sich über Polyadditicn und/oder Polymerisation härten bzw. vernetzen.

Damit die ausgehärteten duromeren Klebschichten auch dynamischen Belastungen gewachsen sind, lassen sich die erfindungsgemäßen Beschichtungsmassen mit sogen. zähelastifizierenden Stoffen (engl. toughening agents) modifizieren. Gemäß vorliegender Erfindung sind hierzu besonders sogen. reaktive flüssige Polymere auf der Grundlage von Butadien-Acrylnitril-Copolymeren mit endständigen Carboxyl-, Epoxid-, Amin- und ethylenisch ungesättigten Gruppen, wie z.B. Hycar® ATBN 1300 x 16 und/oder reaktive Weichmacher und Verdünner auf der Grundlage von hochverzweigten aliphatischen Kohlenwasserstoffepoxiden, wie z.B. PERMETHYL® 100 Epoxide und/oder damit hergestellte Copolymere geeignet. Infolge ihrer hohen Reaktivität werden sie in die duromere Klebschichtmatrix chemisch eingebunden.

Unter dem Begriff "der Härtung bzw. Vernetzung dienende(n) Komponente(n)" sind Reaktionspartner (Härter) und/oder Reaktionskatalysatoren zu verstehen, die in der Lage sind, die Rückgratbindemittel und event. reaktive Additivzusätze in einen duromeren Zustand überzuführen, sowie gegebenenfalls die chemischen Abbindereaktionen zu beschleunigen.

Je nach Wahl der Abbindereaktionen werden Epoxide und Härter mit oder ohne Beschleuniger/Reaktionskatalysatoren eingesetzt, wobei auch die Reaktion Epoxid und Beschleuniger/Reaktionskatalysator ohne Härter möglich ist.

Hierzu eignen sich im Prinzip:

- Beschleuniger/Reaktionskatalysatoren: Proton- und/oder Elektronenpaardonatoren, wie Protonen- und/oder Lewissäuren, Säurekatalysatoren, wie p-Toluolsulfonsäure, Dinonylnaphthalin-disulfonsäure, Dodecylbenzolsulfonsäure, Phosphorsäuren, Carbonsäuren, Radikalbildner.

Für die gewünschte schnelle An- oder Aushärtung, insbesondere für mehrstufige Härtungen bzw. Vernetzungen sind die Härter und/oder Beschleuniger, insbesondere bei einem alleinigen Einsatz, weniger geeignet. Zur Erzielung von kurzen An- und/oder Aushärtungszeiten sind vorzugsweise Borhalogenidkomplexe, wie Bortrifluoridamine und Metallkomplexe der allgemeinen Formel

$$ML_x B_y \text{ oder } M(SR)_x B_z$$

worin

M = ein Metallion
L = ein Ligand
SR = ein Säurerestion
B = eine Lewis-Base
x = eine Zahl von 1 bis 8
y = eine Zahl von 1 bis 5
z = eine Zahl von 7 bis 8

ist, geeignet.

Solche Metallkomplexverbindungen, die insbesondere die Ionen der 2, und 3. Hauptgruppe, sowie der Nebengruppenelemente des Periodensystems,Liganden von chelatbildenden Verbindungen, Säurerestionen aus einer anorganischen Säure und Lewis-Basen, insbesondere Imidazolderivate enthalten, sind in der PCT-Anmeldung WO 91/13925 beschrieben, auf die ausdrücklich Bezug genommen wird.

Insbesondere bevorzugt sind Komplexe der allgemeinen Formel

$$M(SR)_x B_z$$

worin M, SR, B, x und z vorstehende Bedeutung haben,
sowie überraschenderweise die Kombination von aromatischen Aminen und Lewissäuren, vorzugsweise Arylsulfonsäuren.

Zum Härten bzw. Vernetzen von ethylenisch ungesättigten Gruppen werden radikalbildende Verbindungen benötigt. Hierzu eignen sich organische Peroxide, wie z.B. Benzoylperoxid, Cumolhydroperoxid, Ketonperoxid allein oder in Verbindung mit Beschleunigern, wie z.B. N,N-Diethylanilin, Toluidine.

Es ist ein weiterer Vorteil der Komplexe der allgemeinen Formel

$$M(SR)_x B_z$$

daß sie sowohl Epoxid- als auch ethylenisch ungesättigte Gruppen aktivieren. Dadurch wird eine schnelle Härtung bzw. Vernetzung von dualhärtenden Rückgratbindelmitteln mit nur einem Härtungskatalysator ermöglicht.

Das Härten bzw. Vernetzen der reaktiven Gruppen kann auch mittels Strahlen erfolgen. Beim Einsatz von UV-Strahlen sind den erfindungsgemäßen adhäsiven Beschichtungsmassen Photoinitiatoren und gegebenenfalls noch Synergisten zuzusetzen. Bei ionischen Härtungsreaktionen lassen sich vorstehende Beschleuniger und Katalysatoren, wie z.B. Lewisbasen und -säuren einsetzen. Bei radikalischen Härtungsmechanismen werden Photoinitiatoren, wie z. B. Benzildimethylketal, und gegebenenfalls Synergisten, wie z.B. 4-Dimethylaminobenzoesäure, benötigt. Für die Elektronenstrahlhärtung sind keine Additive notwendig.

Die erfindungsgemäßen Beschichtungsmassen lassen sich durch weitere Zusätze modifizieren. Geeignete Zusatzstoffe sind u.a. anorganische und/oder organische Füllstoffe, verstärkende Fasern, Pigmente, Farbstoffe, Thixotropiermittel, Netzmittel, Adhäsionspromotoren, sowie die vorstehend beschriebenen zähelastifizierenden Reaktionsstoffe.

Über eine sorgfältige Auswahl der Härtungssysteme und/oder der der Härtung dienenden Komponenten wird auf

- die Anspring- bzw. Aktivierungstemperaturen und Härtungsgeschwindigkeiten und
- die erzielbaren Endeigenschaften, insbesondere der Strukturfestigkeiten

der erfindungsgemäßen Beschichtungsmassen und deren Klebschichten Einfluß genommen. Um nun mit Taktzeiten analog den physikalischen Verbindungsverfahren mit den Klebschicht ausgerüsteten Befestigungselementen arbeiten zu können, ist es vorteilhaft, wie überraschenderweise gefunden wurde, duale Härtungssysteme einzusetzen. Unter dualen und/oder multifunktionalen Härtungssystemen wird gemäß vorliegender Erfindung

a) chemisches Abbinden über Polyaddition, ionische Polymerisation und/oder
b) ein- und mehrstufiges Härten bzw. Vernetzen unter Zufuhr von Energie verstanden.

Die Auslösung der Härtungs- bzw. chemischen Abbindereaktionen in den erfindungsgemäßen Massen und deren Klebschichten erfolgt bei Anspring- bzw. Aktivierungstemperaturen > 80°C und sind damit auch die Härtungs- und/oder Vernetzungstemperaturen.

Die Anspring- bzw. Aktivierungstemperaturen lassen sich innerhalb großer Temperaturintervalle einstellen und liegen vorzugsweise zwischen 80 und 250°C. Die Härtungsgeschwindigkeiten werden nicht allein durch die Anspring- und Aktivierungstemperaturen sondern zusätzlich durch weitere Temperaturerhöhungen mittels Energiezufuhr bestimmt. Steigende Temperaturen erhöhen die Härtungsgeschwindigkeiten und reduzieren die Härtungszeiten der erfindungsgemäßen Klebschichten erheblich.

Ein weiterer bedeutsamer Parameter ist die zeitabhängige Ausbildung und Aufbau einer funktionellen Festigkeit mit den erfindungsgemäßen Beschichtungsmassen und deren Klebschichten. Diese Forderung aus der Praxis wird schon allein aus wirtschaftlichen Gründen gestellt. Unter dem Terminus "funktionelle Festigkeit" wird die notwendige Anfangsklebfestigkeit bei geklebten Fügeteilpaarungen verstanden, damit sie in einem Fertigungsprozeß weiter bearbeitet werden können. Sie liegt im allgemeinen ≥ 10 % der Endfestigkeit.

Die Ausbildung und der Aufbau der funktionellen Festigkeit ist auch bei den erfindungsgemäßen Klebschichten eine zeit- und temperaturabhängige Härtungsfunktion. Um die mit erfindungsgemäßen Klebschichten ausgerüsteten Elemente auch in innovativen Fertigungs- und Montagesystemen "adhäsives Verbinden und Befestigen" einsetzen zu können, hat sich die funktionelle Festigkeit in Zeiteinheiten < 60 Sekunden, vorzugsweise < 15 Sekunden und insbesondere < 10 Sekunden zu entwickeln und auszubilden. Dies läßt sich mit den erfindungsgemäßen Klebschichten dadurch erzielen, wie überraschenderweise gefunden wurde, indem

- dual- oder multifunktionelle Härtungssysteme mit niedrigen und/oder unterschiedlichen Anspring- bzw. Aktivierungstemperaturen ausgewählt und/oder
- die Härtungen mit Temperaturen über den Anspring- bzw. Aktivierungstemperaturen initiiert werden.

Der Begriff "multifunktionelle" Klebschichten, die mittels der erfindungsgemäßen Beschichtungsmassen auf den Verbindungs- und Befestigungselementoberflächen erzeugt werden, bezieht sich vorzugsweise auf die Härtungs- bzw. Vernetzungstemperaturen und -zeiten. Da gerade im Befestigungsbereich, insbesondere Serienmontagen, aus wirtschaftlichen Gründen kurze An- und Durchhärtungszeiten gefordert werden, ist diese Tatsache bei der Auswahl der Rückgratbindemittel, der der Härtung bzw. Vernetzung dienende(n) Komponente(n) und bei den Zusammensetzungen der erfindungsgemässen Beschichtungsmassen ein besonders kennzeichnendes Merkmal. Dies wird besonders dann deutlich erkennbar, wenn "spontane" funktionelle Festigkeiten beim Applizieren von Verbindungs- und Befestigungselementen gefordert werden.

Um dieses Ziel mit den Klebschichten aus den erfindungsgemäßen Beschichtungsmassen erreichen zu können, sind die Klebschichten vorteilhafterweise mit einem mehrstufigen Härtungssystem auszurüsten. In Fertigungssystemen, "adhäsives Verbinden und Befestigung" sind auch mehrfunktionelle Härtungssysteme gefragt, wenn sich damit wechselnde Forderungen, wie z.B. lösbare und/oder andere Klebverbunde, erfüllen lassen. Die Multifunktionalität der erfindungsgemäßen Klebschichten ist zusätzlich darin begründet, weil sie neben der Hauptaufgabe "Kleben" weitere essentielle Pflichten zu übernehmen haben. Diese sind u.a.:

- Korrosionsbeständigkeit
- Abrasions- und Verschleißfestigkeit
- Klebfreiheit vor und nach der Härtung
- Temperatur-, Alterungs-, Langzeit- und/oder Chemikalienbeständigkeit
- werkstoffunabhängiges, universelles Befestigungselement.

Diese Forderungen werden insbesondere dann an die erfindungsgemäßen Klebschichten gestellt, wenn es sich um Massen- und/oder Schüttgut-Verbindungs-und Befestigungselemente handelt.

Aber auch weiteren kritischen Parametern sind die erfindungsgemäßen Klebschichten gewachsen, wie sie aus Serienfertigungen und -montagen bekannt sind. So werden beispielsweise im Fahrzeugbau eine hohe Anzahl an Verbindungs- und Befestigungselementen aus fertigungstechnischen Gründen bereits an der Rohkarosserie montiert. Da in dieser Fertigungsstufe die Oberflächen der Rohkarosserie noch ungereinigt und nicht entfettet sind, sind klebtechnisch keine idealen Voraussetzungen gegeben. Um trotzdem die geforderten "Spontan"- bzw. "Sofort"-Funktionsfestigkeiten, insbesondere beim Applizieren der Verbindungs- und Befestigungselemente mittels Roboter, gewährleisten zu können, müssen die erfindungsgemäßen Klebschichten

- hohe Öl- und Fettaufnahme und/oder -bindeeigenschaften und
- zumindest sehr hohe Anhärtungsgeschwindigkeiten

besitzen.
In Abhängigkeit der Rohstoffauswahl. insbesondere bei den Rückgratbindemitteln und den Härtersystemen lassen sich mit den erfindungsgemäßen Beschichtungsmassen strukturelle Klebschichten herstellen, die Glasübergangstemperaturen bis zu 250°C und Temperaturbeständigkeiten bis zu 300°C nach der Durchhärtung besitzen.

Das Herstellen der erfindungsgemäßen Beschichtungsmassen und das Ausrüsten bzw. Beschichten der Verbindungs- und Befestigungselementoberflächen erfolgt mittels bekannten Verfahrenstechniken. Die Herstellung der Beschichtungsmassen erfolgt indem die schmelzbaren Komponenten auf ihren Schmelzpunkt vorgewärmt und die Härterkomponente(n) unter der Reaktions-Anspringtemperatur in der Schmelze homogen untergemischt werden.

Erfolgt das Beschichten der Verbindungs- und Befestigungselemente mittels Walzen, Tauchen, Sprühen und dgl., werden die erfindungsgemäßen Beschichtungsmassen aus ihren Lösungen, Dispersionen und/oder Schmelzen verarbeitet. Diese Applikationsart aus einer flüssigen Phase hat einen wesentlichen Einfluß auf die Herstellungsart. Zum Ausrüsten von Massen- und/oder Schüttgüter werden Lösungen, Schmelzen und/oder Dispersionen bevorzugt. Schmelzen sind dazu besonders geeignet, weil sie umweltfreundlich und arbeitshygienisch verarbeitbar sind.

Eine Beschichtungsmassenlösung stellt man in der Weise her, indem die Rückgratbindemittel in einem geeigneten inerten organ. Lösemittel, wie z.B. Methylethylketon, Toluol, gelöst und anschließend die anderen Zuschlagstoffe homogen untergemischt werden. Der Feststoffgehalt wird von der Verarbeitungsrheologie und der späteren Schichtstärke der Klebschicht bestimmt.

Bei der Herstellung von wäßrigen Dispersionen sind die Rückgratbindemittel aus ihrer Schmelze in eine wäßrige Phase einzudispergieren, wozu hochtourige Rühr-und Mischwerkzeuge benötigt werden. Der Einsatz von Dispergier- bzw. Emulgiermittel und gegebenenfalls die Gegenwart von geringen Mengen an organischen Lösemitteln kann dabei sehr hilfreich sein. Beim Vorliegen einer stabilen Dispersion werden die restlichen Stoffe untergemischt und erforderlichenfalls eindispergiert.
Solche wäßrige Dispersionen sind insbesondere für die Beschichtung mittels der elektrophoretischen Tauchlackierung geeignet.

Zum Herstellen und Aufbereiten von erfindungsgemäßen adhäsiven Schmelzmassen können diskontinuierliche oder kontinuierlich arbeitende, beheizte Schmelzkneter bzw. Schneckenextruder eingesetzt werden. Dabei muß bei Temperaturen unter den Anspring- bzw. Aktivierungstemperaturen bei sehr kurzen Verweilzeiten gearbeitet werden. Für die elektrostatische Pulverbeschichtung dagegen werden die Bestandteile der erfindungsgemäßen Beschichtungsmassen vorzugsweise in einem sogen. oszillierenden Einschneckenextruder aufbereitet.

Die mit einer erfindungsgemäßen Klebschicht auszurüstenden Verbindungs- und Befestigungselemente können aus unterschiedlichen Werkstoffen und in Formen gefertigt sein. Als Werkstoffe eignen sich u.a. Metalle, Kunststoffe, Cellulosematerial, anorganische Materialien u.v.a.m. Damit die erfindungsgemäßen Beschichtungsmassen die Oberflächen der Verbindungs- und Befestigungselemente optimal benetzen und auf ihnen haften, werden sie gereinigt, entfettet und gegebenenfalls spezifisch oberflächenbehandelt. Diese Oberflächenvorbehandlungen können u.a. mittels Strahlen, Koronaentladungen, Niederdruckplasma, Erosion durchgeführt werden. Gegebenenfalls können die vorbehandelten Flächen mit Adhäsionspromotoren und/oder sog. "Haftprimern" versehen werden, um das Anhaften der anschließend aufzubringenden Klebsschichten an den Grenzflächen zu verbessern.

Das Ausrüsten und Beschichten der Verbindungs- und Befestigungselemente mit einer erfindungsgemäßen Klebschicht erfolgt nach bekannten Verfahrenstechniken, wie z.B. mittels

- Walzen-, Tauch-, Düsen- und/oder Sprühvorrichtungen aus Lösungen, Dispersionen und/oder Schmelzen der erfindungsgemäßen Beschichtungsmassen, wobei beim Sprühauftrag das Airless-Spritzen besonders bevorzugt wird;
- elektrophoretischer Tauchlackierung aus Dispersionen der erfindungsgemäßen Beschichtungsmassen
- elektrostatischer Pulverbeschichtung aus compoundierten, rieselfähigen Pulverteilchen.

Zum Ausrüsten und/oder Beschichten der Verbindungs- und Befestigungselemente können des weiteren auch sog. Misch- und Dosiervorrichtungen eingesetzt werden Sie bieten insbesondere bei hochreaktiven adhäsiven Beschichtungsmassen dann Vorteile, wenn sie als Schmelzen zum Einsatz kommen. Bei dieser Verfahrenstechnik wird kurz vor dem Auftragen, z.B. aus einer Düse, die der Härtung-bzw. Vernetzung dienenden Komponente homogen untergemischt und die reaktive adhäsive Schmelzmasse wird unmittelbar auf der auszurüstenden Klebfläche abgekühlt und damit inaktiviert. Solche Misch- und Dosiervorrichtungen gewährleisten Misch- und Dosiergenauigkeiten von ca. 1 mg.

Die aus einer Lösung und/oder Dispersion hergestellten Klebschichten müssen anschließend einer Trocknung unterworfen werden. Die aus der Schmelze erzeugten Klebschichten verfestigen sich allein durch Abkühlen.

Die zum Beschichten und/oder Trocknen benötigten Energien sind produktspezifisch zu bemessen, damit die Erwärmungen der erfindungsgemäßen Klebschichten unterhalb der Anspringtemperaturen einer Härtung bzw. Vernetzung bleiben. Damit lassen sich Klebschichtschädigungen eliminieren, die sich u.a. bei der Ausbildung der funktionellen Festigkeiten negativ auswirken würden, wie überraschenderweise gefunden wurde.

Ein weiterer Gegenstand ist das Härten bzw. Vernetzen der Klebschichten und das Herstellen von strukturellen Klebverbindungen zwischen Verbindungs- und Befestigungselementen und Trägerwerkstoffoberflächen. Das Reaktivieren und Härten bzw. Vernetzen der erfindungsgemäßen Klebschichten erfolgt durch Zuführung von Energie. In Abhängigkeit der eingesetzten Härtersysteme und der vorgegebenen Funktionalitäten in den erfindungsgemäßen Klebschichten müssen die Energiequellen in der Lage sein, kurzfristig Wärmeenergiemengen bereitzustellen, die Temperaturen zwischen 80 und 350°C bilden können. Beim Härten bzw. Vernetzen ist zwischen Anspring- bzw. Aktivierungs-, Härtungs- und/oder Nachhärtungstemperaturen zu unterscheiden, da diese Einfluß auf die Multifunktionalität der Klebschichten ausüben. Werden z.B. Klebschichten mit mehr funktionellen Härtersystemen aktiviert, so liegt die Anspring- bzw. Aktivierungstemperatur vorzugsweise < 10°C unter der Temperatur, die zum Durch-und/oder Nachhärten benötigt wird, um die spontane Ausbildung der funktionellen Festigkeit sicherstellen zu können.

Das Härten bzw. Vernetzen läßt sich auch mehrstufig durchführen, wenn dies seitens der Praxis gefordert wird.

Mit folgenden bevorzugten Energiearten lassen sich die erfindungsgemäßen Klebschichten aktivieren und härten bzw. vernetzen:

- Wärmeenergie, wie Heißluft, Dampf
- Strahlenenergie, wie aktinisches Licht, insbesondere UV-Strahlen im

   Wellenlängenbereich 420 bis 100 nm;
   Laserstrahlen;
   Infrarotstrahlen;
   Elektronenstrahlen im niederenergetischen Beschleunigungsbereich von 150 bis 300 keV mit einer Dosenverteilung von 0,5 bis 10 Mrad = 5 bis 100 kGy

- Hochfrequenz und Mikrowelle
- Ultraschall, insbesondere mit magnetstriktiven Schwingern bei
   Frequenzen zwischen 2 und 65 kHz
- Reiben und Bewegen.

Um die Temperaturintervalle zwischen den gegebenen Umgebungs- und den benötigten Anspringtemperaturen zur Aktivierung der erfindungsgemäßen Klebschichten zu verkleinern, können die Verbindungs- und Befestigungslemente und gegebenenfalls auch die Befestigungspunkte auf der Trägeroberfläche vorgewärmt werden. Diese Vorwärmtemperaturen liegen vorteilhafterweise einige °C unterhalb der Schmelz- und Erweichungspunkte der Klebschichten. Durch diese Maßnahmen lassen sich die Härtungszeiten, die zumindest zur Erzielung von funktionellen Festigkeiten benötigt werden, merklich verkürzen.

Um die mit einer erfindungsgemäßen Klebschicht ausgerüsteten Verbindungs- und Befestigungselemente rationell in innovativen Fertigungs- und Montagesystemen "adhäsives Befestigen" anwenden zu können, lassen sich beispielsweise bekannte physikalische Verbindungsverfahren in ihren Prozeßbedingungen so modifizieren, daß sie zum Aktivieren und Härten der erfindungsgemäßen Klebschichten einsetzbar sind.

Durch das Bereitstellen von einkomponentigen adhäsiven bzw. einstückigen Beschichtungsmassen gemäß vorliegender Erfindung sind Grundlagen, Perspektiven und Voraussetzungen zum (Vor-) Ausrüsten von Verbindungs- und Befestigungselementen mit härtbaren, multifunktionellen Klebschichten bzw. -filmen geschaffen worden, die sich auch in neue, innovative Fertigungs- und Montagesysteme "adhäsives Befestigen" integrieren lassen. Da die mit den erfindungsgemäßen Klebschichten ausgerüsteten Befestigungselemente analog den bekannten physikalischen Verbindungsverfahren in der Befestigungstechnik verarbeitbar sind, wird gleichzeitig auch bei der Applikation eine relativ hohe Wirtschaftlichkeit gewährleistet.

Ein weiterer essentieller technischer und wirtschaftlicher Fortschritt wird gemäß der vorliegenden Erfindung dadurch geboten, daß

- die Verbindungs- und Befestigungselemente selbst aus unterschiedlichen Werkstoffen gefertigt sein können und
- die mit den erfindungsgemäßen Beschichtungsmassen ausgerüsteten Verbindungs-und Befestigungselemente zur Herstellung von werkstoffunabhängigen Strukturklebungen geeignet und somit universell einsetzbar sind.

Folgende Vorteile sind u.a. in Abhängigkeit der jeweiligen Werkstoffpaarungen und Einsatzbedingungen für die mit den erfindungsgemäßen Klebschichten ausgerüsteten Verbindungs- und Befestigungselemente gegeben:

1. Verbindungs- und Befestigungselemente

- einkomponentige, mit Energie aktivierbare Klebschichten ausgerüstete Verbindungs- und Befestigungselemente aus unterschiedlichen Werkstoffen mit guter Lagerstabilität
- klebfreie, handhabbare, abrasions- und verschleißfeste Klebschichtoberflächen
- beständiger und hochwertiger Korrosionsschutz vor und nach der Härtung
- multifunktionelle Klebschichten mit guter Adhäsion zu Trägerwerkstoffen
- auf fettige und/oder ölige Oberflächen anwendbar
- individuell einstellbare niedrige Anspringtemperaturen und schnelle Härtungszeiten
- frühe funktionelle Klebfestigkeiten > 10 % der Endfestigkeiten
- schrumpfungsarmes und/oder schrumpfungsfreies An- und Durchhärten
- hohe Zugfestigkeitswerte bis zu 25 N/mm$^2$
- hohe Losdrehmomente, die mindestens das 2-fache von geschweißten Elementen besitzen
- hohe Temperaturbeständigkeit (bis 350°C) und hohe Glasübergangstemperaturen (Tg) bis 250°C
- gute Alterungs-, Langzeit- und/oder Chemikalienbeständigkeiten
- hohe Zähelastizität der gehärteten Klebschicht.

2. Klebungen

- Kleben bzw. adhäsives Befestigen von gleichen und ungleichen Werkstoffpaarungen
- Gleichmäßige Spannungsverteilungen in den Klebfugen senkrecht zur Belastungsrichtung
- kein thermisch bedingter Bauteilverzug
- isolierende und/oder dichtende Funktion der Klebschicht
- hohe dynamische Festigkeiten
- hohe Schwingungsdämpfung.

Die Erfindung wird durch die folgenden Beispiele erläutert, ohne jedoch darauf beschränkt zu sein.

**Beispiel 1**

Folgende adhäsive Beschichtungsmasse wurde hergestellt:

100 Gewichtsteile (GT) N,N,N',N'-Tetraglycidyl α, α'-bis-(4-aminophenyl)-p-diisopropylbenzol mit einem Epoxyäquivalent von 160 und einem Schmelzpunkt von 65 °C wurden in 100 GT Methylethylketon bei 25 °C gelöst. Anschließend wurden dieser Rückgratbindemittellösung 60 GT $\alpha,\alpha'$-bis-(4-Aminophenyl)-p-diisopropylbenzol als Härter und 0,8 GT Dodecylbenzolsulfonsäure als Katalysator zugesetzt und darin homogen gelöst. Zum Aufbau einer wärmebeständigen Thixotropie und zur Verstärkung der adhäsiven Beschichtungsmasse wurden 1,0 GT Aramid-Faser-Pulpe in die Masse mit einem hochtourigen Dissolver eingearbeitet.

Die fertige adhäsive Beschichtungsmasse besaß hochthixotrope Eigenschaften.

Mit dieser Beschichtungsmasse wurden Stahlbolzen mit einer Klebfläche von 112 mm$^2$ ausgerüstet. Das Lösemittel wurde im Trockenschrank abgedampft. Die Klebschichtstärke auf den Stahloberflächen lag zwischen 50 und 60 μm. Nach dem Abdampfen der Lösemittel haftete die Klebschicht fest auf dem Stahluntergrund und war trocken und klebfrei.

Mit den klebschichtausgerüsteten Klebbolzen wurden Klebungen auf einem Stahlblech durchgeführt. Die Stahloberfläche wurde halbseitig mit Aceton entfettet und gereinigt. Die andere Hälfte blieb ungereinigt.

Je 5 Bolzen wurden im Trockenschrank auf 60 °C vorgewärmt. Die Vorwärmung des Stahlbleches erfolgte auf einer temperaturregulierbaren Heizplatte. Beim Kleben hat die Stahlblechoberfläche eine Temperatur von 180 °C.

Auf die 180 °C heiße Stahloberfläche wurden die vorgewärmten und mit der Klebstoffschicht ausgerüsteten Stahlbolzen kurz aufgedrückt. Nach 5 Sekunden wurde das Stahlblech mit den aufgeklebten Bolzen von der Heizplatte entfernt und bei Raumtemperatur gekühlt. Nach Abkühlung auf 25 °C wurden die Zugfestigkeitswerte ermittelt. Diese betrugen im Mittel 300 N - bezogen auf eine Klebfläche von 112 mm$^2$.

Auf einem 2. Stahlblech wurden - wie vorstehend beschrieben - nochmals je 5 beschichtete Stahlbolzen geklebt, jedoch mit der Änderung, daß die Klebschichten 20 Minuten bei 180 °C gehärtet wurden. Nach Abkühlen auf 25 °C dieses Prüfbleches mit aufgeklebten Befestigungsbolzen wurden die Zugfestigkeiten und die Losbrechmomente ermittelt.

| Zugfestigkeit | |
|---|---|
| gereinigte Klebfläche | 1800 N/112 mm$^2$ |
| ungereinigte Klebfläche | 1750 N/112 mm$^2$ |

| Losbrechmomente beim Drehen: | |
|---|---|
| gereinigte Klebfläche | 10 Nm/112 mm$^2$ |
| ungereinigte Klebfläche | 10 Nm/112 mm$^2$ |

Diese Festigkeitswerte demonstrieren, daß die adhäsive Beschichtungsmasse ein hohes Ölaufnahme- und Bindevermögen besitzt und praktisch keinen Einfluß auf die Klebfestigkeiten hat.

**Beispiel 2**

Das Beispiel 1 wurde mit der Abänderung wiederholt, indem der Härter und Katalysator durch eine Metallkomplexverbindung nach WO 91/13925 ersetzt und zusätzlich ein Präaddukt als Zähelastizitäts-Modifikator zugesetzt wurde. Die Zusatzmenge des FeSO$_4$ (Imidazol)$_8$-Komplexes betrug 10 GT. Des weiteren wurden 20 GT eines Präadduktes aus Butadien-Acrylnitril-Copolymeren mit endständigen Amingruppen und einem stark verzweigten aliphatischen Kohlenwasserstoffepoxid PERMETHYL 100 Epoxide (1 : 1) zugesetzt.

Die mit dieser adhäsiven Beschichtungsmasse ausgerüsteten Befestigungsbolzen besaßen nach dem Abdampfen des Lösemittels trockene und klebfreie Oberflächen.

Die Prüfung der beschichteten Stahlbolzen ergaben folgende Werte:

| | |
|---|---|
| Anspringtemperatur | 150 °C |
| Härtungszeit bei 210 °C | 60 Sekunden |
| Zugfestigkeit | 1200 N/112 mm$^2$ |
| Losbrechmomente | 15 - 16 Nm/112 mm$^2$ |

**Beispiel 3**

100 Gewichtsteilen eines mit Carboxylgruppen terminiertem Butadien-Acrylnitril-Kautschuk modifizierten o-Kresol-Novolak-Epoxidharzes (Epoxidequivalent ca. 225, Erweichungspunkt ca. 70 °C) wurden in der Schmelze bei

EP 0 750 654 B1

70 - 80 °C 15 Gewichtsteile Cobaltsulfat (Imidazol)$_8$ Komplex zugesetzt und kurzfristig in einem Extruder homogenisiert.

Mit dieser adhäsiven Schmelze wurden die Klebflächen von Metallbolzen beschichtet und anschließend abgekühlt.

Mit diesen so ausgerüsteten Klebbolzen wurde eine zweistufige Härtung durchgeführt. Nach einer Verweilzeit von 10 Sekunden bei 110 °C wurde in der 1. Stufe eine funktionelle Festigkeit von 250 N/112 mm$^2$ (Zugfestigkeit) erzielt (Abspaltung von 2 Mol Imidazol). Die Nachhärtung von 10 Sekunden 210 °C ergab eine Zugscherfestigkeit von 2700 N/mm$^2$ und ein Losbrechmoment von 18 - 22 N/m.

**Beispiel 4**

100 Gewichtsteile des Epoxidharzes aus Beispiel 3 wurden in der Schmelze mit 50 Gewichtsteilen Pyromellitsäureanhydrid (Härter) und 5 Gewichtsteile der Metallkomplexverbindung (NiSO$_4$(Methylimidazol)$_7$-Komplex) versetzt und auf einem Extruder homogenisiert. Damit wurden die Klebflächen von Aluminiumbolzen ausgerüstet. Folgende Werte wurden ermittelt:

| | |
|---|---|
| Härtungstemperatur (induktiv erzeugte Wärme) | 220 °C |
| Härtungszeit | 6 Sekunden |
| Zugfestigkeit | 1750 N/112 mm$^2$ (Werkstoffbruch) |
| Losbrechmoment | 19 - 21 Nm (Werkstoffbruch) |

**Beispiel 5**

Das Epoxidharz des Beispiels 3 wurde bei 80 °C geschmolzen, 4 Gewichtsteile Dicyandiamid und 4 Gewichtsteile der Metallkomplexverbindung (FeSO$_4$(Imidazol)$_8$-Komplex) gemäß Beispiel 2 in der Schmelze untergemischt und in einem Einschnecken-Extruder homogenisiert. Die damit ausgerüsteten Stahlbolzen lieferten folgende Werte:

| | |
|---|---|
| Härtungszeit | 18 Sekunden bei 200 °C |
| Zugfestigkeit | 2400 N/112 mm$^2$ |
| Losbrechmoment | 18 - 20 Nm |

**Beispiel 6**

1 Mol des Epoxidharzes aus Beispiel 3 wurde mit einem Mol Acrylsäure an einer endständigen Epoxidgruppe umgesetzt. Diesem auf diese Weise erhaltenen dualfunktionellen Rückgratbindemittel, mit je einer Epoxid- und Acrylgruppe im Molekül, wurden in seiner Schmelze je 2 Gewichtsteile Photonitiatoren Irgacure® 189 und 652 (Hersteller CIBA-GEIGY) homogen untermischt und damit Metallbolzen ausgerüstet. Vor dem Kleben wurde die Klebstoffschicht auf den Bolzen unter einer UV-Lampe 80 W und einem Infrarotstrahler 30 Sekunden aktiviert und erwärmt. Die Bolzen mit der aktivierten Klebstoffschicht drückte man auf ein Stahlblech. Nach 2 Sekunden betrug die ermittelte funktionlle Festigkeit 150 N/112 mm. Anschließend wurden die geklebten Fügeteilpaarungen 30 Minuten bei 180 °C im Wärmeschrank nachgehärtet und folgende Werte ermittelt:

| | |
|---|---|
| Zugfestigkeit bei 23 °C | 1800 N/112 mm$^2$ |
| Zugfestigkeit bei 150 °C | 1400 N/112 mm$^2$ |
| Zugfestigkeit bei -25 °C | 1900 N/112 mm$^2$ |

**Beispiel 7**

Mit der adhäsiven Beschichtungsmasse gemäß Beispiel 2 wurden 10 analoge Befestigungselemente aus einem glasfaserverstärkten, teilaromatischen Polyamid mit einer 50 pm starken Klebschicht ausgerüstet.

Die auf 60 °C vorgewärmten Befestigungselemente wurden auf eine Stahlplatte bei 180 °C geklebt.

Nach Abkühlen des Prüfkörpers auf Raumtemperatur konnten keine Zugfestigkeitswerte und Losbrechmomente ermittelt werden, weil Werkstoffbruch im Kunststoff eintrat.

**Beispiel 8**

Das Beispiel 1 wurde mit der Abänderung wiederholt, indem das Epoxidharz durch ein festes Novolakepoxidharz mit einem Epoxyäquivalentgewicht von ca. 230 ersetzt und die Härtermenge auf 50 GT reduziert wurde. - Die fertige Lösung der adhäsiven Beschichtungsmasse wurde zum Schluß mit Methylethylketon auf eine tauchfähige Viskosität von 50 Sekunden - gemessen im DIN-Becher, 4 mm - weiter verdünnt.

In dieser Tauchlösung wurden Befestigungselemente aus Metall und Kunststoffe durch Eintauchen und anschließend Abtropfen und Trocknen bei 50 °C beschichtet. Durch 2-maliges Tauchen wurde eine Klebschichtstärke von 70 µm erzielt.

Die bei 220 °C geklebten und 2 Minuten gehärteten Befestigungselemente hatten Zugfestigkeiten von 1200 bis 1400 N/112 mm$^2$/20 °C.

Ein Teil dieser geklebten Befestigungselemente wurde 180 Minuten bei 210 °C nachgehärtet. Die anschliessend ermittelten Zugfestigkeiten lagen bei 1700 bis 1800 N/112 mm$^2$/20 °C.

**Beispiel 9**

Prüfelemente aus Karosserie-Stahlblech (150 x 100 x 0,8 mm) wurden entlang der Längskante mit dem Klebstoff aus Beispiel 3 in einer Breite von 120 mm und einer Stärke von 100 µm ausgerüstet.

Auf die gereinigten Klebflächen der mit Klebstoff ausgerüsteten Prüfelemente wurden unbeschichtete Prüfelemente gelegt und in der Wärme flächige als auch punktförmige Klebungen hergestellt.

Die flächigen Klebungen wurden in einer beheizten Presse (200°C) bei einer Verweildauer von 30 Sekunden hergestellt. Die Punktklebungen wurden in der Weise erzeugt, indem man die überlappten Klebflächen mit einer Zange, die mit beheizbaren Preßbacken (120 mm) ausgestattet ist, bei einer Temperatur von 300°C 40 Sekunden zusammenpreßt.

Ein Teil der geklebten Prüfkörper wurde 30 Minuten bei 180°C nachgehärtet. Nach dem Abkühlen wurden aus den geklebten Verbundelementen Prüfkörper hergestellt, die jeweils eine Klebfläche von 250 x 120 mm hatten.

Folgende Zugscherfestigkeitswerte (DIN 53 281 - T 02 - 79 - A) wurden ermittelt: (Durchschnittswerte aus jeweils 5 Messungen)

|  | Funktionelle Festigkeit N / mm$^2$ | Endfestigkeit N / mm$^2$ |
|---|---|---|
| Flächige Klebung | 11 (nach 30 Sek./200°C) | 35 (30 Min./180°C) |
| Punkt-Klebung | 10 (Nach 40 Sek./300°C) | 32 (30 Min./180°C) |

**Patentansprüche**

1. Einkomponentige, duroplastisch härtende Beschichtungsmassen, bestehend aus Rückgratbindemitteln, Härtungs- bzw. Vernetzungsmitteln und gegebenenfalls von Zusatzstoffen, wobei die Beschichtungsmassen bei Temperaturen < 50° C klebfrei und die Bindemittel bei Temperaturen < 50° C halbfest bis fest sind und bei Temperaturen > 50° C erweichen, **dadurch gekennzeichnet,** daß diese Beschichtungsmittel ein oder mehrere chemisch abbindende Rückgrat-Bindemittel mit einem mittleren Molekulargewicht (Mw) zwischen 500 und 250 000, einen Schmelz-und/oder Erweichungspunkt von mehr als 50° C und eine Glasübergangstemperatur von mehr als -20° C haben, daß mindestens eines der Bindemittel als reaktive Gruppen Epoxidgruppen enthält und daß die Beschichtungsmasse bei Temperaturen unterhalb 80° nicht härten oder vernetzen und bei Temperaturen im Bereich von 80° bis 250° C aushärten und dabei innerhalb von 15 sec. mindestens 10% der Endfestigkeiten erreichen.

2. Beschichtungsmassen nach Anspruch 1, dadurch gekennzeichnet, daß die Rückgratbindemittel in mehreren Stufen härten bzw. vernetzen.

3. Beschichtungsmassen nach Anspruch 1 und 2, dadurch gekennzeichnet, daß die Rückgratbindemittel unterschiedlich härtende bzw. vernetzende Struktureinheiten haben.

4. Beschichtungsmassen nach Anspruch 1 bis 3, dadurch gekennzeichnet, daß die Rückgratbindemittel reaktive Epoxidgruppen und ethylenisch ungesättigte Gruppen haben.

5. Beschichtungsmassen nach einem der Ansprüche 1 bis 4, dadurch gekennzeichnet, daß sie als Härter und/oder Beschleuniger eine Kombination aus aromatischen Aminen und Lewissäuren enthalten.

6. Beschichtungsmassen nach einem der Ansprüche 1 bis 5, dadurch gekennzeichnet, daß sie als Härter und Beschleuniger einen Komplex der allgemeinen Formel

$$ML_x B_y \text{ oder } M(SR)_x B_z$$

worin

M = ein Metallion
L = ein Ligand
SR = ein Säurerestion
B = eine Lewis-Base
x = eine Zahl von 1 bis 8
y = eine Zahl von 1 bis 5
z = eine Zahl von 7 - 8

ist, enthalten.

7.   Beschichtungsmassen nach einem der Ansprüche 1 bis 6, dadurch gekennzeichnet, daß sie elastifizierende Stoffe enthalten.

8.   Beschichtungsmassen nach einem der Ansprüche 1 bis 7, dadurch gekennzeichnet, daß die Massen einstückig sind.

9.   Verfahren zur Herstellung der Beschichtungsmassen gemäß einem der Ansprüche 1 bis 8, dadurch gekennzeichnet, daß man die schmelzbaren Komponenten auf ihren Schmelzpunkt vorwärmt und die Härterkomponente(n) unter der Reaktions-Anspringtemperatur in der Schmelze homogen untermischt.

10.  Verwendung der Beschichtungsmassen gemäß einem der Ansprüche 1 bis 8 zum adhäsiven Ausrüsten von Oberflächen.

11.  Verwendung der Beschichtungsmassen gemäß einem der Ansprüche 1 bis 8 zum adhäsiven Ausrüsten von Befestigungselementoberflächen.

12.  Verwendung der Beschichtungsmassen gemäß einem der Ansprüche 1 bis 8 zum adhäsiven Imprägnieren textiler Werkstoffe.

## Claims

1.   A single-component, thermosettingly hardening coating materials comprising chain bonding agents, hardening or cross-linking agents and possibly additives, wherein the coating materials are non-adhesive at temperatures < 50°C and the bonding agents are semi-solid to solid at temperatures < 50°C and soften at temperatures > 50°C, characterised in that said coating agents have one or more chemically setting chain bonding agents with a mean molecular weight (Mw) of between 500 and 250,000, a melting and/or softening point of more than 50°C and a vitreous transition temperature of more than -20°C, that at least one of the bonding agents contains epoxy groups as reactive groups, and that the coating materials do not harden or cross-link at temperatures below 80°C and they set at temperatures in the range of 80°C to 250°C and reach at least 10% of the final strengths within 15 seconds.

2.   Coating materials according to claim 1 characterised in that the chain bonding agents harden or cross-link in a plurality of stages.

3.   Coating materials according to claim 1 and claim 2 characterised in that the chain bonding agents have structural units which harden or cross-link differently.

4.   Coating materials according to claims 1 to 3 characterised in that the chain bonding agents have reactive epoxy groups and ethylenically unsaturated groups.

5.   Coating materials according to one of claims 1 to 4 characterised in that they contain as hardener and/or accelerator a combination of aromatic amines and Lewis acids.

6. Coating materials according to one of claims 1 to 5 characterised in that as hardener and accelerator they contain a complex of the general formula:

$$ML_xB_y \text{ or } M(SR)_xB_z$$

wherein

M = a metal ion
L = a ligand
SR = an acid ester ion
B = a Lewis base
x = a number of from 1 to 8
y = a number of from 1 to 5
z = a number of 7 - 8.

7. Coating materials according to one of claims 1 to 6 characterised in that they contain elasticising substances.

8. Coating materials according to one of claims 1 to 7 characterised in that the materials are in one piece.

9. A process for the production of the coating materials according to one of claims 1 to 8 characterised in that the meltable components are pre-heated to their melting point and the hardener component or components is homogeneously mixed in the molten material below the reaction initiation temperature.

10. Use of the coating materials according to one of claims 1 to 8 for adhesively equipping surfaces.

11. Use of the coating materials according to one of claims 1 to 8 for adhesively equipping fixing element surfaces.

12. Use of the coating materials according to one of claims 1 to 8 for adhesively impregnating textile materials.

**Revendications**

1. Compositions d'enduction duroplastiques durcissables à un seul composant, se composant de liants à radical, d'agents promoteurs de durcissement et, ou encore, de réticulation et le cas échéant d'agents d'addition, les compositions d'enduction ne collant pas à des températures < 50°C et les liants étant semi-solides jusqu'à solides à des températures < 50°C et se ramollissant à des températures > 50°C, caractérisée en ce que ces agents d'enduction comprennent un ou plusieurs liants à radical polymérisant par voie chimique, ayant un poids moléculaire (Mw) se situant entre 500 et 250 000, un point de fusion et, ou encore de ramollissement supérieur à 50°C et une température de passage à l'état vitrifié supérieure à -20°C, en ce qu'au moins un des liants comporte en tant que groupes réactifs des groupes époxyliques et en ce que la composition d'enduction ne polymérise pas ou ne réticule pas à des températures inférieures à 80°C et polymérise de manière complète à des températures se situant dans une fourchette comprise entre 80°C et 250°C et, ce faisant, atteint en l'espace de 15 s. au moins 10% de ses propriétés de résistance mécanique finales.

2. Compositions d'enduction selon la revendication 1, caractérisées en ce que les liants à radical polymérisent ou réticulent en plusieurs étapes.

3. Compositions d'enduction selon les revendications 1 et 2, caractérisées en ce que les liants à radical comprennent des unités structurales polymérisant ou réticulant de manière différente.

4. Compositions d'enduction selon les revendications 1 à 3, caractérisées en ce que les liants à radical comprennent des groupes époxyliques réactifs et des groupes éthylèniquement non saturés.

5. Compositions d'enduction selon l'une des revendications 1 à 4, caractérisées en ce qu'elles comprennent en tant que durcisseur et ou encore en tant qu'accélérateur un combinaison d'amines aromatiques et d'acides de Lewis.

6. Compositions d'enduction selon l'une des revendications 1 à 5, caractérisées en ce qu'elles comprennent en tant que durcisseur et, ou encore en tant qu'accélérateur un complexe de formule générale

$$ML_xB_y \text{ ou } M(SR)_xB_z$$

dans laquelle:

M = un ion métallique
L = un élément de liaison
SR = un ion acide résiduel
B = une base de Lewis
x = un chiffre de 1 à 8
y = un chiffre de 1 à 5
z = un chiffre de 7 - 8

7. Compositions d'enduction selon l'une des revendications 1 à 6, caractérisées en ce qu'elles comprennent des substances favorisant l'élasticité.

8. Compositions d'enduction selon l'une des revendications 1 à 7, caractérisées en ce que les compositions sont en une seule fraction.

9. Procédé pour la fabrication des compositions d'enduction selon l'une des revendications 1 à 8, caractérisé en ce que l'on préchauffe les composants fusibles jusqu'à leur point de fusion et que l'on mélange de manière homogène dans la matière fondue le(s) composant(s) durcisseur(s) à la température d'amorçage de la réaction.

10. Utilisation des compositions d'enduction selon l'une des revendications 1 à 8 pour l'application de revêtements adhésifs sur des surfaces.

11. Utilisation des compositions d'enduction selon l'une des revendications 1 à 8 pour l'application de revêtements adhésifs sur des surfaces d'éléments de fixation.

12. Utilisation des compositions d'enduction selon l'une des revendications 1 à 8 pour imprégner de substances adhésives des matières textiles.